# EUROPEAN PATENT APPLICATION

(11) **EP 4 542 197 A1**
(43) Date of publication of application: **23.04.2025**
(21) Application number: 24203085.6
(22) Date of filing: 27.09.2024
(51) Int. Cl.: G01N 15/1031

(54) **LIQUID PATH SYSTEM FOR SHEATH FLOW IMPEDANCE COUNTING**

(30) Priority: 20.10.2023 CN 202311367108
(71) Applicant: Guilin Urit medical Electronics Co., LTD, Guangxi Zhuang Autonomous Region (CN)
(72) Inventor: Wang, YouCheng, Guilin (CN); Yang, Long, Guilin (CN); Liu, ChengWang, Guilin (CN)
(74) Representative: Sun, Yanan

(57) **Abstract**

The present disclosure relates to the technical field of medical instruments, and in particular to a liquid path system for sheath flow impedance counting. The system includes a sample treatment unit, a sheath liquid unit and a counting component unit, where the sample treatment unit includes a sample cup, a first valve, a second valve, a first metering pump, a sixth valve, a ninth valve, a second metering pump, and an eleventh valve, the sample cup is connected to the sixth valve and the second valve, the first metering pump is connected to the first valve and the second valve, the ninth valve and the sixth valve are connected to the counting component unit, the second metering pump is connected to the ninth valve and the eleventh valve, and the sheath liquid unit is connected to the second valve. A sheath liquid tank is a liquid storage tank with positive pressure, and provides all sheath liquid and cleaning liquid for the system by accurately controlling the pressure, a fourth valve and a thirteenth valve are controlled to be on and off to complete the operations of bubble discharge of the counting component unit, washing of a gem hole of a front chamber, etc., and a fifth valve and an eighth valve are controlled to discharge bubbles and clean the rear chamber, such that automatic cleaning is realized, and labor is saved.

## Description

### TECHNICAL FIELD

The present disclosure relates to the technical field of medical instruments, and in particular to a liquid path system for sheath flow impedance counting.

### BACKGROUND

Sheath flow impedance counting is a conventional method for analyzing and counting particles, and various components of an existing sheath flow impedance counting device are mainly connected by means of bonding. The sealing property of glue bonding is unreliable or aging occurs after use, such that liquid leakage is likely to occur.

A sheath flow impedance counting device and a sheath current impedance counting method are disclosed in the existing patent with the publication No. CN103091230A. The device includes a sample needle mounting portion, a capture tube mounting portion, and a front cell housing and a rear cell housing which are connected and fixed into a whole. A counting assembly is arranged at the communication position of a front cell inner cavity of the front cell housing and a rear cell inner cavity of the rear cell housing, a rotating buckle lug is arranged on the sample needle mounting portion and/or the capture tube mounting portion, a rotating buckle seat is correspondingly arranged on the front cell housing and/or the rear cell housing, and the rotating buckle lug matches and is connected to the rotating buckle seat in a fastened manner. The sample needle mounting portion is fixed on the front cell housing to seal the front cell inner cavity, and the capture tube mounting portion is fixed on the rear cell housing to seal the rear cell inner cavity. The sample needle mounting portion and the capture tube mounting portion can be disassembled, such that a gem hole, a sample needle, a capture tube, and the front cell inner cavity and the rear cell inner cavity are conveniently cleaned and maintained, and the maintainability is improved. The disassembly is convenient and fast, and the assembly efficiency and the sealing property are improved.

However, according to the sheath flow impedance counting device and the sheath flow impedance counting method, when the front cell inner cavity and the rear cell inner cavity are cleaned, it is necessary to manually disassemble each portion and then perform cleaning, thereby increasing manual labor.

### SUMMARY

An objective of the present disclosure is to provide a liquid path system for sheath flow impedance counting, which solves the problems that according to the above-mentioned sheath flow impedance counting device and sheath flow impedance counting method, when the front cell inner cavity and the rear cell inner cavity are cleaned, it is necessary to manually disassemble each portion and then perform cleaning, thereby increasing manual labor.

In order to achieve the above objective, the present disclosure provides a liquid path system for sheath flow impedance counting. The system includes a sample treatment unit, a sheath liquid unit and a counting component unit.

The sample treatment unit includes a sample cup, a first valve, a second valve, a first metering pump, a sixth valve, a ninth valve, a second metering pump, and an eleventh valve. The sample cup is connected to the sixth valve and the second valve, and the first metering pump is connected to the first valve and the second valve. The ninth valve and the sixth valve are connected to the counting component unit, the second metering pump is connected to the ninth valve and the eleventh valve, and the sheath liquid unit is connected to the second valve.

The sample cup is provided with reagent ports, a sample output port and an overflow port, two reagent ports are provided, and the two reagent ports are located at one side of the sample cup. The sample output port is located below the reagent ports, and the overflow port is located above the reagent ports.

The sample treatment unit further includes a sample injector, a third valve and a fourth valve, and the sample injector is connected to the sixth valve, the third valve and the counting component unit. The fourth valve is connected to the third valve and the counting component unit.

The counting component unit includes a sample needle assembly, a front chamber, a gem hole sealing assembly, a rear chamber, a rear chamber sample collecting tube and sealing rings. The sample needle assembly is connected to the ninth valve, the sixth valve and the sample injector, the front chamber is connected to the sample needle assembly, and the rear chamber is connected to the front chamber and is located at the side, far away from the sample needle assembly, of the front chamber. The gem hole sealing assembly is positioned between the front chamber and the rear chamber, and the rear chamber sample collecting tube is connected to the rear chamber and positioned at the side, far away from the front chamber, of the rear chamber. A plurality of sealing rings are arranged, and the plurality of sealing rings are positioned between the rear chamber and the rear chamber sample collecting tube, and between the front chamber and the sample needle assembly respectively.

The counting component unit further includes a first waste liquid isolation cup and a second waste liquid isolation cup, the first waste liquid isolation cup is connected to the rear chamber, and the second waste liquid isolation cup is connected to the rear chamber sample collecting tube and the rear chamber.

The sheath liquid unit includes a sheath liquid tank, a fifth valve, a seventh valve, an eighth valve, a twelfth valve and a thirteenth valve. The sheath liquid tank is connected to the second valve, and the fifth valve and the twelfth valve. The seventh valve is connected to the first waste liquid isolation cup, the eighth valve is connected to the second waste liquid isolation cup, and the twelfth valve is connected to the thirteenth valve, the front chamber and the sheath liquid tank.

The sheath liquid unit further includes a waste liquid tank, a fourteenth valve, a negative pressure tank and a tenth valve. The waste liquid tank is connected to the thirteenth valve, the eighth valve and the fourteenth valve, the negative pressure tank is connected to the fourteenth valve, the tenth valve and the eighth valve, and the tenth valve is connected to the ninth valve and the second metering pump.

According to the liquid path system for sheath flow impedance counting of the present disclosure, a sample is added from an opening of the sample cup, the first metering pump operates again, diluent is added, and the sample is synchronously mixed evenly in a vortex manner for later use. The second metering pump is controlled by the eleventh valve to extract the sample mixed well in the sample cup, and the sample is sent to the counting component unit for later use by means of the overflow port. The metering pump has accurate sampling precision, and can ensure the consistency of sample suction. The sample cup is an open type, and the upward opening provides space for a sample needle. The sample cup plays a role in premixing the sample evenly. The sample cup is further characterized in that a liquid discharge port is reserved at the bottom, a diameter of the liquid discharge port determines whether an air column at the bottom can support base liquid of the sample cup without causing the difference of counting accuracy caused by the change of the concentration of sample particles, and the liquid discharge port can be connected to the negative pressure tank or a waste liquid pump to discharge waste liquid by means of a two-way electromagnetic valve. Moreover, the two reagent ports are reserved at a side surface of the bottom of the sample cup, and the reagent port is used for reagent base liquid discharge and cleaning of the sample cup. The sheath liquid unit is mainly used for sheath flow formation during counting and cleaning of the counting component unit. The sheath liquid tank is a liquid storage tank with positive pressure, and provides all sheath liquid and cleaning liquid for the system by accurately controlling the pressure. The fourth valve and the thirteenth valve are controlled to be on and off to complete the operations of bubble discharge of the counting component unit, washing of a gem hole of the front chamber, etc., and the fifth valve and the eighth valve are controlled to discharge bubbles and clean the rear chamber, such that automatic cleaning is realized, and labor is saved.

### BRIEF DESCRIPTION OF THE DRAWINGS

In order to more clearly illustrate technical solutions in the examples of the present disclosure or in the prior art, a brief introduction to the accompanying drawings required for the description of the examples or the prior art will be provided below.
FIG. 1 is a schematic diagram of a liquid path system for sheath flow impedance counting of the present disclosure.
FIG. 2 is a schematic structural diagram of a counting component unit of the present disclosure.
FIG. 3 is a schematic structural diagram of a sample cup of the present disclosure.
FIG. 4 is a flow diagram of counting of the present disclosure.

In the figures: 101-sample cup, 102-first valve, 103-second valve, 104-first metering pump, 105-sixth valve, 106-ninth valve, 107-second metering pump, 108-eleventh valve, 109-reagent port, 110-sample output port, 111-overflow port, 112-sample injector, 113-third valve, 114-fourth valve, 115-sample needle assembly, 116-front chamber, 117-gem hole sealing assembly, 118-rear chamber, 119-rear chamber sample collecting tube, 120-sealing ring, 121-first waste liquid isolation cup, 122-second waste liquid isolation cup, 123-sheath liquid tank, 124-fifth valve, 125-seventh valve, 126-eighth valve, 127-twelfth valve, 128-thirteenth valve, 129-waste liquid tank, 130-fourteenth valve, 131-negative pressure tank, and 132-tenth valve.

### DETAILED DESCRIPTION OF EMBODIMENTS

The examples of the present disclosure are described in detail below, and instances of the examples are shown in the accompanying drawings. The examples described below with reference to the accompanying drawings are exemplary and intended to explain the present disclosure, instead of being construed as limiting the present disclosure.

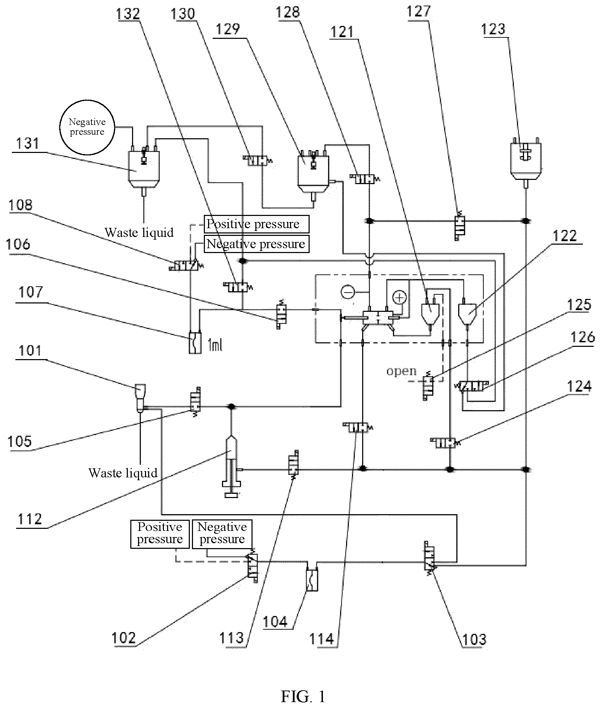

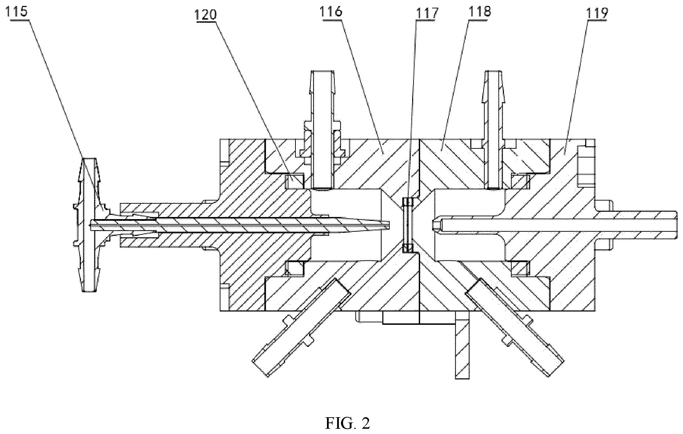

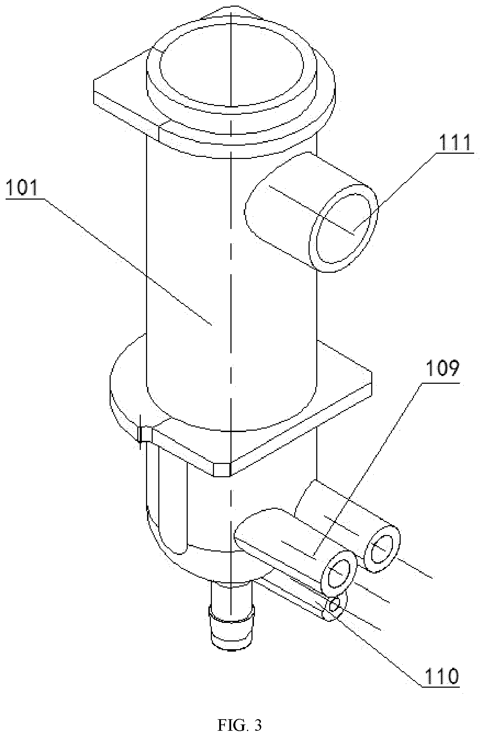

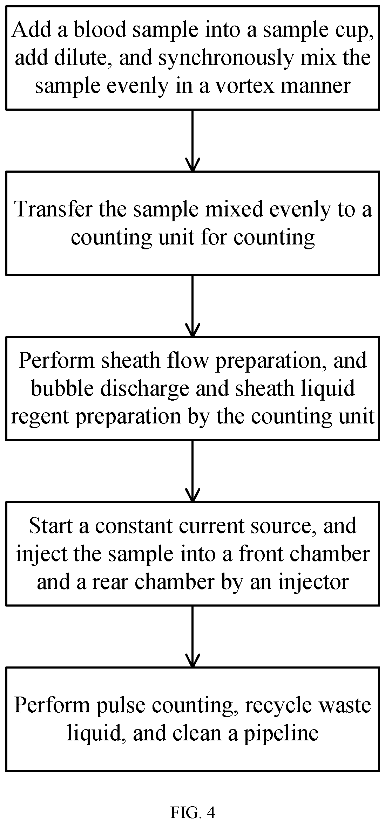

Referring to FIGs. 1-4, FIG. 1 is a schematic diagram of a liquid path system for sheath flow impedance counting of the present disclosure. FIG. 2 is a schematic structural diagram of the counting component unit of the present disclosure. FIG. 3 is a schematic structural diagram of a sample cup 101 of the present disclosure. FIG. 4 is a flow diagram of counting of the present disclosure. The present disclosure provides a liquid path system for sheath flow impedance counting. The system includes a sample treatment unit, a sheath liquid unit and a counting component unit. The sample treatment unit includes a sample cup 101, a first valve 102, a second valve 103, a first metering pump 104, a sixth valve 105, a ninth valve 106, a second metering pump 107, an eleventh valve 108, a sample injector 112, a third valve 113 and a fourth valve 114. The sample cup 101 is provided with reagent ports 109, a sample output port 110 and an overflow port 111. The counting component unit includes a sample needle assembly 115, a front chamber 116, a gem hole sealing assembly 117, a rear chamber 118, a rear chamber sample collecting tube 119, sealing rings 120, a first waste liquid isolation cup 121, and a second waste liquid isolation cup 122. The sheath liquid unit includes a sheath liquid tank 123, a fifth valve 124, a seventh valve 125, an eighth valve 126, a twelfth valve 127, a thirteenth valve 128, a waste liquid tank 129, a fourteenth valve 130, a negative pressure tank 131, and a tenth valve 132.

For a particular embodiment, the sample cup is connected to the sixth valve 105 and the second valve 103, and the first metering pump 104 is connected to the first valve 102 and the second valve 103. The ninth valve 106 and the sixth valve 105 are connected to the counting component unit, the second metering pump is connected to the ninth valve 106 and the eleventh valve 108, and the sheath liquid unit is connected to the second valve 103. Two reagent ports 109 are provided, and the two reagent ports 109 are located at one side of the sample cup 101, the sample output port 110 is located below the reagent ports 109, and the overflow port 111 is located above the reagent ports 109. The sample injector 112 is connected to the sixth valve 105, the third valve 113 and the counting component unit, and the fourth valve 114 is connected to the third valve 113 and the counting component unit.

Before sample dispensing, the first metering pump 104 is controlled by the first valve 102 and the second valve 103 by means of switching to add base liquid into the sample cup 101, and a sample is added from an opening of the sample cup 101. The first metering pump 104 operates again, diluent is added, and the sample is synchronously mixed evenly in a vortex manner for later use. The second metering pump 107 is controlled by the eleventh valve 108 to extract the sample mixed well in the sample cup, and the sample is sent to the counting component unit for later use by means of the overflow port 111. The metering pump has accurate sampling precision and can ensure the consistency of sample suction. The sample cup 101 is an open type, and the upward opening provides space for a sample needle. The sample cup 101 plays a role in premixing the sample evenly. The sample cup 101 is further characterized in that a liquid discharge port is reserved at the bottom, a diameter of the liquid discharge port determines whether an air column at the bottom can support the base liquid of the sample cup 101 without causing the difference of counting accuracy caused by the change of the concentration of sample particles, and the liquid discharge port can be connected to the negative pressure tank 131 or a waste liquid pump to discharge waste liquid by means of a two-way electromagnetic valve. Moreover, the two reagent ports 109 are reserved at a side surface of the bottom of the sample cup 101, and the reagent port 109 is used for reagent base liquid discharge and cleaning of the sample cup 101.

The sheath liquid tank 123 is connected to the second valve 103, and the fifth valve 124 and the twelfth valve 127. The seventh valve 125 is connected to the first waste liquid isolation cup 121, the eighth valve 126 is connected to the second waste liquid isolation cup 122, and the twelfth valve 127 is connected to the thirteenth valve 128, the front chamber 116 and the sheath liquid tank 123. The waste liquid tank 129 is connected to the thirteenth valve 128, the eighth valve 126 and the fourteenth valve 130, the negative pressure tank 131 is connected to the fourteenth valve 130, the tenth valve 132 and the eighth valve 126, and the tenth valve 132 is connected to the ninth valve 106 and the second metering pump 107.

The sheath liquid unit is mainly used for sheath flow formation and cleaning of counting components. The sheath liquid tank 123 is a liquid storage tank with positive pressure, and provides all sheath liquid and cleaning liquid for the system by accurately controlling the pressure, the fourth valve 114 and the thirteenth valve 128 are controlled to be on and off to complete the operations of bubble discharge of the counting component unit, washing of a gem hole of the front chamber 116, etc., and the fifth valve 124 and the eighth valve 126 are controlled to discharge bubbles and clean the rear chamber 118.

The sample needle assembly 115 is connected to the ninth valve 106, the sixth valve 105 and the sample injector 112, the front chamber 116 is connected to the sample needle assembly 115, and the rear chamber 118 is connected to the front chamber 116 and is located at the side, far away from the sample needle assembly 115, of the front chamber 116. The gem hole sealing assembly 117 is positioned between the front chamber 116 and the rear chamber 118, and the rear chamber sample collecting tube 119 is connected to the rear chamber 118 and positioned at the side, far away from the front chamber 116, of the rear chamber 118. A plurality of sealing rings 120 are arranged, and the plurality of sealing rings 120 are positioned between the rear chamber 118 and the rear chamber sample collecting tube 119, and between the front chamber 116 and the sample needle assembly 115 respectively. The first waste liquid isolation cup 121 is connected to the rear chamber 118, and the second waste liquid isolation cup 122 is connected to the rear chamber 118 sample collecting tube and the rear chamber 118.

The sample needle assembly 115 is of a sample counting channel, and the sealing rings 120 are sealing member of the front chamber 116 and the rear chamber 118 respectively, so as to ensure airtightness. The gem hole sealing assembly 117 is of a particle counting hole, and the sample needle assembly 115, the front chamber 116, the gem hole sealing assembly 117, the rear chamber 118, the rear chamber sample collecting tube 119 and other related cavities are cylinders, so as to ensure coaxiality thereof. Before counting, reagents will be added into the bottom of the front chamber 116 and the bottom of the rear chamber 118 by means of the fourth valve 114 and the fifth valve 124, and bubbles in the cavities are discharged synchronously by means of the thirteenth valve 128 and the eighth valve 126, so as to achieve the purpose of cleaning a gem hole. In addition, when the front chamber 116 and the rear chamber 118 are cleaned rapidly, the eighth valve 126 can be opened to form large flow by the negative pressure tank 131 to achieve rapid cleaning and bubble discharging operations.

The sample to be counted is transferred to the three-way position of the sample needle assembly 115 to prepare for counting, and impedance counting is started by means a constant current source. The twelfth valve 127 and the fifth valve 124 are opened, sheath liquid of the sheath flow tank enters the front chamber 116 and the rear chamber 118, and sheath flow is formed in the front chamber and the rear chamber 118. The liquid is discharged to the waste liquid tank 129 by means of the eighth valve 126, and the waste liquid tank 129 is connected to the atmosphere. In actual use, a waste liquid collecting port of the waste liquid tank 129 needs to be at the same level as a waste liquid outlet of the second waste liquid isolation cup 122 or maintain a certain liquid level, so as to ensure smooth discharge of waste liquid, maintain the liquid level of the sheath liquid of the first waste liquid isolation cup 121, and achieve the purpose of not affecting the counting accuracy. After the sheath flow is formed, the ninth valve 106 is closed, the sixth valve 105 is opened, and the sample injector 112 has been pulled down to the set position. A motor assembly pushes a plunger rod of the injector upwards to inject the quantitative sample into the sample needle assembly 115 at a specific speed. Sample particles quickly queue up to pass through counting micropores of the gem hole sealing assembly 117 by means of the sheath liquid of the front chamber 116. During the whole counting process, a negative electrode and a positive electrode are arranged in the front chamber and the rear chamber 118 respectively. By conducting the constant current source between the front chamber and the rear chamber, a stable voltage is formed between the front chamber 116 and the rear chamber 118 and the gem hole sealing assembly 117, and different signal pulses are recorded when different particles pass through the gem hole, so as to determine the total number and concentration of various particles in the sample to be measured. After the sample counting is completed, the sample in the rear chamber 118 is wrapped around the rear sheath liquid and smoothly enters the rear chamber sample collecting tube 119, and occasionally diffused particles will enter the waste liquid of the second waste liquid isolation cup 122 together with the sample in the rear chamber sample collecting tube 119 by means of a liquid discharge tube at a top of the rear chamber 118, so as to ensure that the reagent in the rear chamber 118 is not contaminated and ensure low carryover. The waste liquid of the second waste liquid isolation cup 122 is discharged into the waste liquid tank 129 by means of the eighth valve 126.

The liquid path system for sheath flow impedance counting in this example automatically operates by means of the control unit, and the control unit is a logic control center of the system and controls a liquid path, a gas path module, and electric injector driving module, a constant current source analog circuit module and a structural unit module to complete particle counting. When the liquid path system is cleaned, the waste liquid of the sample cup 101 can be discharged directly, the first valve 102 (gas valve) and the second valve 103 (liquid valve) are switched, and the first metering pump 104 operates to pump the quantitative reagent into the sample cup 101 and discharge the waste liquid. The above operations are repeated until the sample cup 101 satisfies the carrying requirements. The third valve 113 (liquid valve), the second valve 103 (liquid valve), the ninth valve 106 (liquid valve), and the tenth valve 132 (liquid valve) are opened to clean a sample pipeline, and the waste liquid is taken away by the negative pressure tank 131. The sample in the sample needle assembly 115 discharges the waste liquid to the second waste liquid isolation cup 122 by means of the sheath flow counting operation, and simultaneously discharges bubbles for preparation of the next counting process. Effective and accurate counting of the particles can be realized. The bubbles in the front chamber and the rear chamber 118 and the pipeline are quickly discharged to reduce interference factors. More precise liquid path control reduces the impact of carryover contamination in the counting process. The impact of external electrical signals is reduced by means of good electrical isolation and shielding design. The optimized counting flow of the liquid path can improve the testing speed, reduce the interference of microbubbles to particle counting, and improve the accuracy of particle counting, such that particle analysis performance can be improved. Manual cleaning is not needed, and manpower is saved.

What are disclosed above are only one or more preferred examples of the present disclosure, and cannot be used for limiting the scope of the claims of the present disclosure. Those of ordinary skill in the art can understand all or part of the processes for implementing the above examples, and equivalent changes made according to the claims of the present disclosure still fall within the scope of the present disclosure.

## Claims

1. A liquid path system for sheath flow impedance counting, comprising a sample treatment unit, a sheath liquid unit and a counting component unit, wherein
the sample treatment unit comprises a sample cup, a first valve, a second valve, a first metering pump, a sixth valve, a ninth valve, a second metering pump, and an eleventh valve, the sample cup is connected to the sixth valve and the second valve, the first metering pump is connected to the first valve and the second valve, the ninth valve and the sixth valve are connected to the counting component unit, the second metering pump is connected to the ninth valve and the eleventh valve, and the sheath liquid unit is connected to the second valve.

2. The liquid path system for sheath flow impedance counting according to claim 1, wherein
the sample cup is provided with reagent ports, a sample output port and an overflow port, two reagent ports are provided, the two reagent ports are located at one side of the sample cup, the sample output port is located below the reagent ports, and the overflow port is located above the reagent ports.

3. The liquid path system for sheath flow impedance counting according to claim 1, wherein
the sample treatment unit further comprises a sample injector, a third valve and a fourth valve, the sample injector is connected to the sixth valve, the third valve and the counting component unit, and the fourth valve is connected to the third valve and the counting component unit.

4. The liquid path system for sheath flow impedance counting according to claim 3, wherein
the counting component unit comprises a sample needle assembly, a front chamber, a gem hole sealing assembly, a rear chamber, a rear chamber sample collecting tube and sealing rings, the sample needle assembly is connected to the ninth valve, the sixth valve and the sample injector, the front chamber is connected to the sample needle assembly, the rear chamber is connected to the front chamber and is located at the side, far away from the sample needle assembly, of the front chamber, the gem hole sealing assembly is positioned between the front chamber and the rear chamber, the rear chamber sample collecting tube is connected to the rear chamber and positioned at the side, far away from the front chamber, of the rear chamber, a plurality of sealing rings are arranged, and the plurality of sealing rings are positioned between the rear chamber and the rear chamber sample collecting tube, and between the front chamber and the sample needle assembly respectively.

5. The liquid path system for sheath flow impedance counting according to claim 4, wherein
the counting component unit further comprises a first waste liquid isolation cup and a second waste liquid isolation cup, the first waste liquid isolation cup is connected to the rear chamber, and the second waste liquid isolation cup is connected to the rear chamber sample collecting tube and the rear chamber.

6. The liquid path system for sheath flow impedance counting according to claim 5, wherein
the sheath liquid unit comprises a sheath liquid tank, a fifth valve, a seventh valve, an eighth valve, a twelfth valve and a thirteenth valve, the sheath liquid tank is connected to the second valve, the fifth valve and the twelfth valve, the seventh valve is connected to the first waste liquid isolation cup, the eighth valve is connected to the second waste liquid isolation cup, and the twelfth valve is connected to the thirteenth valve, the front chamber and the sheath liquid tank.

7. The liquid path system for sheath flow impedance counting according to claim 6, wherein
the sheath liquid unit further comprises a waste liquid tank, a fourteenth valve, a negative pressure tank and a tenth valve, the waste liquid tank is connected to the thirteenth valve, the eighth valve and the fourteenth valve, the negative pressure tank is connected to the fourteenth valve, the tenth valve and the eighth valve, and the tenth valve is connected to the ninth valve and the second metering pump.
